(19) Europäisches Patentamt
European Patent Office
Office européen des brevets

(11) EP 0 927 226 B1

(12) **EUROPÄISCHE PATENTSCHRIFT**

(45) Veröffentlichungstag und Bekanntmachung des Hinweises auf die Patenterteilung:
**18.07.2001 Patentblatt 2001/29**

(21) Anmeldenummer: **97942004.9**

(22) Anmeldetag: **09.09.1997**

(51) Int Cl.$^7$: **C08L 51/00**, C08L 51/04, C08L 25/02, C08L 53/02

(86) Internationale Anmeldenummer:
**PCT/EP97/04913**

(87) Internationale Veröffentlichungsnummer:
**WO 98/12257 (26.03.1998 Gazette 1998/12)**

(54) **THERMOPLASTISCHE FORMMASSEN**
THERMOPLASTIC MOULDING COMPOUNDS
MATIERES MOULABLES THERMOPLASTIQUES

(84) Benannte Vertragsstaaten:
**AT BE DE ES FR GB IT NL SE**

(30) Priorität: **19.09.1996 DE 19638256**

(43) Veröffentlichungstag der Anmeldung:
**07.07.1999 Patentblatt 1999/27**

(73) Patentinhaber: **BASF AKTIENGESELLSCHAFT**
**67056 Ludwigshafen (DE)**

(72) Erfinder:
- **GÜNTHERBERG, Norbert**
  **D-67346 Speyer (DE)**
- **WEBER, Martin**
  **D-67487 Maikammer (DE)**
- **KNOLL, Konrad**
  **D-67069 Ludwigshafen (DE)**
- **LINDENSCHMIDT, Gerhard**
  **D-69181 Leimen (DE)**

(56) Entgegenhaltungen:
**EP-A- 0 708 145**

- **DATABASE WPI Section Ch, Week 9410 Derwent Publications Ltd., London, GB; Class A14, AN 94-077327 XP002050593 & JP 06 016 890 A (SHINETSU CHEM IND CO LTD) , 25.Januar 1994**
- **DATABASE WPI Section Ch, Week 9347 Derwent Publications Ltd., London, GB; Class A18, AN 93-374708 XP002050594 & JP 05 279 549 A (JAPAN SYNTHETIC RUBBER CO LTD) , 26.Oktober 1993**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 927 226 B1

## Beschreibung

Die vorliegende Erfindung betrifft thermoplastische halogenfreie Formmassen aus

A) 30 bis 98 Gew.-% eines Pfropfpolymerisates aus

$a_K$) 30 bis 90 Gew.-% eines kautschukelastischen Pfropfkerns, erhältlich durch Copolymerisation von

$a_K$/1) 80 bis 99,99 Gew.-% eines oder mehrerer ($C_1$-$C_{10}$-Alkyl)ester der Acrylsäure,

$a_K$/2) 0,01 bis 20 Gew.-% eines vernetzenden Monomeren, und

$a_K$/3) 0 bis 40 Gew.-% von einem oder mehreren weiteren monoethylenisch ungesättigten Monomeren,

$a_S$) 10 bis 70 Gew.-% einer Pfropfschale aus

$a_S$/1) 50 bis 100 Gew.-% einer Styrolverbindung der allgemeinen Formel

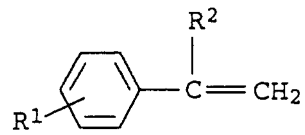

in der $R^1$ und $R^2$ für Wasserstoff oder $C_1$-$C_8$-Alkyl stehen,

oder eines ($C_1$-$C_8$-Alkyl)esters der Acrylsäure oder Methacrylsäure,

oder einer Mischung der Styrolverbindung und des ($C_1$-$C_8$-Alkyl)esters der Acrylsäure oder Methacrylsäure, und

$a_s$/2) 0 bis 50 Gew.-% von einem oder mehreren weiteren monoethylenisch ungesättigten Monomeren,

B) 1 bis 50 Gew.-% eines thermoplastischen Polymerisates aus

$b_1$) 50 bis 100 Gew.-% Styrol und/oder $\alpha$-Methylstyrol,

$b_2$) 0 bis 50 Gew.-% Acrylnitril, und

$b_3$) 0 bis 50 Gew.-% von einem oder mehreren weiteren Monomeren,

und von 1 bis 70 Gew.-% einer Komponente C, die sich dadurch auszeichnet, daß sie

ein kautschukelastisches Blockcopolymerisat, in welchem die olefinischen Doppelbindungen vollständig oder nahezu vollständig hydriert wurden ist und aus

mindestens zwei Blöcken A, die einpolymerisierte Einheiten eines vinylaromatischen Monomeren und eine Glasübergangstemperatur über 25°C aufweisen

und mindestens einen zwischen den Blöcken A befindlichen elastomeren Block B/A, der sowohl

statistisch einpolymerisierte Einheiten eines vinylaromatischen Monomeren (A) wie eines Diens (B) aufweist, statistisch aufgebaut ist und eine Glasübergangstemperatur Tg unter 25°C hat,

wobei der Anteil der aus den Blöcken B/A gebildeten Hartphase am gesamten Blockcopolymerisat 1 - 40 Volumen-% und der Gewichtsanteil des Diens weniger als 50 Gew.% beträgt,

aufgebaut ist.

Des weiteren betrifft die Erfindung solche Formmassen, in denen die Komponente C) eine spezielle Zusammensetzung aufweist, die Verwendung dieser Formmassen zur Herstellung von Folien und Formkörpern sowie Folien und Formkörper aus diesen Formmassen.

Kunststoffolien haben vielfältige Einsatzgebiete. Bestimmte Folien, insbesondere flexible Folien mit lederartigem Aussehen, werden in großem Umfang bei der Innenraumgestaltung, beispielsweise von Kraftwagen, oder als Ledarersatz verwendet. Sie werden meist durch Kalandrieren oder Extrusion hergestellt.

Hauptbestandteil dieser Folien ist derzeit zumeist Polyvinylchlorid (PVC), welches Weichmacher und häufig auch noch andere Vinylpolymerisate enthält. Die Folien sind jedoch nur bedingt alterungsstabil, und außerdem können die mitverwendeten Weichmacher im Laufe der Zeit ausschwitzen.

Aus der EP-A 526 813 sind thermoplastische Formmassen aus einem hochvernetzten Acrylatkautschuk mit einer Pfropfhülle aus Methylmethacrylat oder Styrol/Acrylnitril, einem teilvernetzten Acrylatkautschuk, einem Ethylen/Vinylacetat-Copolymerisat sowie gegebenenfalls einem weiteren Polymerisat auf Basis von Styrol und/oder Acrylverbindungen bekannt. Unter den Bedingungen der Formgebung, beispielsweise zu Folien, neigen diese Massen jedoch zu unerwünschten Abbaureaktionen.

In der DE-A 42 11 412 werden als Folienmaterial Mischungen aus Styrol/Acrylnitril-Polymerisaten und Thermoplasten empfohlen, die eine Pfropfhülle aus einem elastomeren Polymerisat haben. Die Herstellung derartiger Pfropfpolymerisate ist jedoch verfahrenstechnisch aufwendig, so daß es schwierig ist, gleichbleibende Produktqualitäten zu erhalten.

In der EP-A 708 145 werden thermoplastische Formmassen beschrieben, die neben Pfropfpolymerisaten und Styrol/Acrylnitril-Polymerisaten Copolymere auf der Basis von Styrol und/oder $\alpha$-Methylstyrol sowie Butadien enthalten, in welchen die olefinischen Doppelbindungen vollständig oder nahezu vollständig hydriert wurden. Diese Formmassen dienen insbesondere zur Herstellung von Folien, z. B. zu Gestaltung des Autoinnenraums oder als Ledarersatz.

Insbesondere weisen die Folien aus den bisher bekannten Formmassen nicht in vollem Umfang zufriedenstellende Tiefzieheigenschaften auf und haben eine hohe Shore-Härte, weshalb die gewünschte griffige, lederähnliche ("soft-touch") Oberfläche nicht immer erzielt wird.

Der Erfindung lagen thermoplastische Formmassen als Aufgabe zugrunde, die leicht in gleichbleibender Qualität herstellbar und ohne Qualitätsverlust, beispielsweise durch Abbaureaktionen, zu Formkörpern, speziell zu Folien, weiterverarbeitbar sind. Weiterhin sollten Formmassen bereitgestellt werden, aus denen Formkörper, insbesondere Folien herstellbar sind, die sich durch gute Tiefzieheigenschaften (hohe Reißdehnung und hohe Weitreißfestigkeit) sowie durch eine geringe Shore-Härte auszeichnen.

Demgemäß wurden die eingangs definierten thermoplastischen Formmassen gefunden.

Weiterhin wurden Formmassen mit speziellen Ausführungsformen der Komponente C) gefunden. Außerdem wurde die Verwendung der Polymermischung zur Herstellung von Folien und Formkörpern gefunden sowie Folien und Formkörper aus diesen Massen.

Die Komponente A) ist in den erfindungsgemäßen Formmassen, bezogen auf die Summe der Komponenten A), B) und C), mit einem Anteil von 30 bis 98, bevorzugt 40 bis 90 und besonders bevorzugt 50 bis 82 Gew.-% enthalten. Bei dieser Komponente handelt es sich um ein partikelförmiges Pfropfcopolymerisat, das aus einem kautschukelastischen Pfropfkern $a_K$) ("Weichkomponente") und einer darauf gepfropften Schale $a_S$) ("Hartkomponente") aufgebaut ist.

Der Pfropfkern $a_K$) ist mit einem Anteil von 30 bis 90, bevorzugt 40 bis 80 und insbesondere 50 bis 75 Gew.-%, bezogen auf die Komponente A), enthalten.

Man erhält den Pfropfkern $a_K$) durch Polymerisation eines Monomerengemisches aus, bezogen auf $a_K$)

$a_K$/1) 80 bis 99,99, bevorzugt 85 bis 99,5 und besonders bevorzugt 90 bis 99 Gew.-% eines oder mehrerer ($C_1$-$C_{10}$-Alkyl)ester der Acrylsäure,

$a_K$/2) 0,01 bis 20, bevorzugt 0,5 bis 10 und besonders bevorzugt 1 bis 5 Gew.-% eines vernetzenden Monomeren, und

$a_K$/3) 0 bis 20, bevorzugt 0 bis 5 Gew.-% von einem oder mehreren weiteren Monomeren.

Als Acrylsäurealkylester (Alkylacrylate) $a_K$/1) eignen sich vor allem solche, die sich vom Ethanol, vom 2-Ethylhexanol und besonders vom n-Butanol ableiten. Es kann ein Acrylsäurealkylester alleine, oder auch eine Mischung mehrerer Alkylacrylate mit unterschiedlichen Alkylresten, verwendet werden.

Vernetzende Monomere $a_K$/2) sind bi- oder polyfunktionelle Comonomere, beispielsweise Butadien und Isopren, Divinylester von Dicarbonsäuren wie der Bernsteinsäure und Adipinsäure, Diallylund Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols der nachstehenden Formel

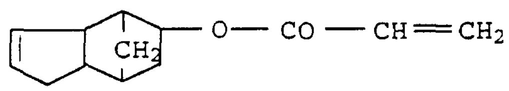

der unter dem Namen Dihydrodicyclopentadienylacrylat bekannt ist, sowie die Allylester der Acrylsäure und der Methacrylsäure.

Der Bestandteil $a_K$) der Formmassen kann außerdem auf Kosten der Monomeren $a_K$/1) und $a_K$/2) weitere Monomere $a_K$/3) enthalten, welche die mechanischen und thermischen Eigenschaften des Kerns in einem gewissen Bereich variieren. Als Beispiele für solche monoethylenisch ungesättigten Comonomere $a_K$/3) seien genannt:

vinylaromatische Monomere wie Styrol, Styrolderivate der allgemeinen Formel I

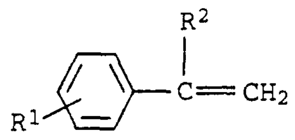

(I);

in der $R^1$ und $R^2$ für Wasserstoff oder $C_1$-$C_8$-Alkyl stehen;

Methacrylnitril, Acrylnitril;

Acrylsäure, Methacrylsäure, weiterhin Dicarbonsäuren wie Maleinsäure und Fumarsäure sowie deren Anhydride wie Maleinsäureanhydrid;

Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid;

$C_1$-$C_4$-Alkylester der Methacrylsäure wie Methylmethacrylat, Ethylmethacrylat, n-Propylmethacrylat, i-Propylmethacrylat, n-Butylmethacrylat, Isobutylmethacrylat, sek.-Butylmethacrylat, tert.-Butylmethacrylat sowie Hydroxyethylacrylat;

aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;

ungesättigte Ether wie Vinylmethylether

sowie Mischungen dieser Monomeren.

Die Pfropfschale $a_s$) wird erhalten durch Polymerisation eines Monomerengemisches aus, bezogen auf $a_s$),

$a_s$/1) 50 bis 100, bevorzugt 60 bis 95 und besonders bevorzugt 65 bis 85 Gew.-% einer Styrolverbindung der allgemeinen Formel I

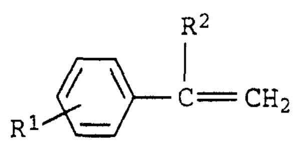

(I)

in der $R^1$ und $R^2$ für Wasserstoff oder $C_1$-$C_8$-Alkyl stehen,

oder eines ($C_1$-$C_8$-Alkyl)esters der Acrylsäure oder Methacrylsäure,

oder einer Mischung der Styrolverbindung und des ($C_1$-$C_8$-Alkyl)esters der Acrylsäure oder Methacrylsäure, und

$a_s$/2) 0 bis 50, vorzugsweise 15 bis 35 Gew.-% von einem oder mehreren weiteren Monomeren.

Als Styrolverbindung der allgemeinen Formel (I) (Komponente $a_s$/1)) setzt man vorzugsweise Styrol, α-Methylstyrol sowie außerdem mit $C_1$-$C_8$-Alkyl kernalkylierte Styrole wie p-Methylstyrol oder tert.-Butylstyrol, ein. Styrol ist besonders bevorzugt.

Anstelle der Styrolverbindungen oder in Mischung mit ihnen kommen $C_1$- bis $C_8$-Alkylester der Acrylsäure und/oder Methacrylsäure in Betracht, besonders solche, die sich vom Methanol, Ethanol, n- und iso-Propanol, sek.-, tert.- und iso-Butanol, Pentanol, Hexanol, Heptanol, Octanol und 2-Ethylhexanol und vor allem vom n-Butanol ableiten. Besonders bevorzugt ist Methylmethacrylat.

Weiterhin kann die Schale $a_s$) auf Kosten der Monomeren $a_s$/1) aus weiteren Comonomeren $a_s$/2) aufgebaut sein. Für die Komponente $a_s$/2) gelten die gleichen Empfehlungen wie für die Komponente $a_K$/3).

Weiterhin seien für $a_s$/2) als weitere Monomere genannt: Maleinimid, N-Methyl-, N-Phenyl- und N-Cyclohexylmaleinimid, sowie Monomere, die mit sauren bzw. basischen funktionellen Gruppen modifiziert sind, z.B. die für $a_k$/3) genannten Säuren bzw. deren Anhydride bzw. die für $a_k$/3) genannten Stickstoff-funktionellen Monomere. Bevorzugt werden für die Komponente $a_s$/2) von den genannten Monomeren Acrylnitril, Methacrylnitril und Maleinimid verwendet, wobei Acrylnitril besonders bevorzugt ist.

Vorzugsweise ist die Pfropfhülle $a_s$) aus Styrol oder Methylmethacrylat aufgebaut, oder aus einer Mischung aus 40 bis 90 Gew.-% Methylmethacrylat und dem Rest Acrylnitril oder einer Mischung aus 65 bis 85 Gew. -% Styrol und dem Rest Acrylnitril.

Die Pfropfpolymerisate A) sind in an sich bekannter Weise erhältlich, vorzugsweise durch Emulsionspolymerisation bei 30 bis 80°C. Hierfür eignen sich als Emulgatoren beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze von Alkylsulfonaten oder Fettsäuren mit 10 bis 18 Kohlenstoffatomen.

Vorzugsweise verwendet man zur Herstellung der Dispersion soviel Wasser, daß die fertige Dispersion einen Feststoffgehalt von 20 bis 50 Gew.-% hat.

Als Polymerisationsinitiatoren kommen vorzugsweise Radikalbildner, beispielsweise Peroxide wie bevorzugt Peroxosulfate und Azoverbindungen wie Azodiisobutyronitril in Betracht. Es können jedoch auch Redox-Systeme, insbesondere solche auf Basis von Hydroperoxiden wie Cumolhydroperoxid, eingesetzt werden. Ferner kann man Molekulargewichtsregler wie z.B. Ethylhexylthioglycolat, n- und t-Dodecylmercaptan, Terpinole und dimeres α-Methylstyrol mitverwenden.

Zur Einhaltung eines konstant bleibenden pH-Wertes, der vorzugsweise bei 6 bis 9 liegt, kann man Puffersubstanzen wie $Na_2HPO_4/NaH_2PO_4$ oder Natriumhydrogencarbonat mitverwenden.

Emulgatoren, Initiatoren, Regler und Puffersubstanzen werden in den üblichen Mengen eingesetzt, so daß sich nähere Angaben hierzu erübrigen.

Man kann den Pfropfkern besonders bevorzugt auch durch Polymerisation der Monomeren $a_K$) in Gegenwart eines feinteiligen Kautschuklatex herstellen (sog. "Saatlatex-Fahrweise" der Polymerisation).

Prinzipiell ist es auch möglich, die Pfropfgrundlage nach einem anderen Verfahren als dem der Emulsionspolymerisation herzustellen, z.B. durch Masse- oder Lösungspolymerisation, und die erhaltenen Polymerisate nachträglich zu emulgieren. Auch die Mikrosuspensionspolymerisation ist geeignet, wobei bevorzugt öllösliche Initiatoren wie Lauroylperoxid und t-Butylperpivalat verwendet werden. Die Verfahren hierfür sind bekannt.

Die Pfropfschale $a_s$) kann einstufig aufgebaut sein, wobei in der Regel die Komponenten $a_s$/1) und $a_s$/2) gleichzeitig oder mit einem Gradienten zugegeben werden. Ebenso kann sie mehrstufig aufgebaut sein, wozu man beispielsweise zunächst die Komponente $a_s$/1), und danach die Komponente $a_s$/2) oder ein Gemisch aus $a_S$/1) und $a_S$/2), polymerisiert. Hierbei kann das Mengenverhältnis $a_S$/1) : $a_S$/2) konstant sein oder im Verlauf der Zugabe des Gemisches variieren, wobei der Gradient kontinuierlich oder stufenförmig sein kann.

Darüberhinaus ist dem Fachmann bekannt, daß die Zugabe der Pfropfmonomeren $a_s$/1) und $a_s$/2) auf einmal (batchweise), oder im Zulaufverfahren erfolgen kann. Dabei kann die Zulaufrate konstant oder variabel sein. Auch Kombinationen dieser Zugabeverfahren sind gebräuchlich.

Vorzugsweise stimmt man die Reaktionsbedingungen in an sich bekannter Weise so aufeinander ab, daß die Polymerisat-Teilchen einen möglichst einheitlichen Durchmesser $d_{50}$ im Bereich von 60 bis 1500, besonders von 150 bis 1000 nm haben.

Anstelle eines einheitlichen Pfropfpolymerisates A) kann man zur Herstellung der erfindungsgemäßen thermoplastischen Massen auch verschiedene dieser Polymerisate verwenden, vor allem solche mit deutlich unterschiedlicher Teilchengröße. Derartige Mischungen mit bimodaler Größenverteilung bieten verfahrenstechnische Vorteile bei

der Weiterverarbeitung. Geeignete Teilchendurchmesser liegen im Bereich von 60 bis 200 nm einerseits und 300 bis 1000 nm andererseits.

Weiterhin eignen sich auch Pfropfpolymerisate mit mehreren "weichen" und "harten" Schalen, z.B. des Aufbaus $a_K$) - $a_S$) - $a_K$) -$a_S$) oder $a_S$)-$a_K$)-$a_S$), vor allem im Falle größerer Teilchen.

Soweit bei der Pfropfung nicht gepfropfte Polymere aus den Monomeren $a_S$) entstehen, werden diese Mengen, die in der Regel unter 10 Gew.-% von $a_S$) liegen, der Masse der Komponente A) zugeordnet.

Die Komponente B) der erfindungsgemäßen Formmasse ist mit einem Anteil von 1 bis 50, bevorzugt 5 bis 40 und besonders bevorzugt 10 bis 30 Gew.-%, bezogen auf die Summe der Komponenten A), B) und C), enthalten. Der Bestandteil B) ist ein thermoplastisches Polymerisat, das aus

$b_1$) 50 bis 100, bevorzugt 55 bis 95 und besonders bevorzugt 60 bis 85 Gew.-% Styrol oder α-Methylstyrol,

$b_2$) 0 bis 50, bevorzugt 5 bis 45 und besonders bevorzugt 15 bis 40 Gew.-% Acrylnitril, sowie

$b_3$) 0 bis 50, bevorzugt 0 bis 40 Gew.-% von einem oder mehreren weiteren Monomeren,

jeweils bezogen auf die Komponente B), besteht. Als Monomere $b_3$) kommen diejenigen in Betracht, die für die Komponente $a_K$/3) und $a_S$/2) genannt wurden.

Bevorzugte Monomere $b_3$) sind die Alkyl- und Arylester der Methacrylsäure sowie die Amide der Methacrylsäure. Als bevorzugte Monomere $b_3$) seien genannt: Methylmethacrylat, Maleinsäureanhydrid, Maleinimide, sowie untergeordnete Mengen Glycidylmeth acrylat, Acrylsäure, Methacrylsäure und Dimethylaminoethylacrylat.

Bevorzugt ist beispielsweise eine Komponente B) aus einem Copolymeren aus 60 bis 95 Gew.-% Styrol und 5 bis 40 Gew.-% Acrylnitril. Besonders bevorzugt ist ein Copolymeres aus 60 bis 85 Gew.-% Styrol und 15 bis 40 Gew.-% Acrylnitril.

Die Polymeren B), die wegen ihrer Hauptkomponenten Styrol und Acrylnitril allgemein auch als SAN-Polymere bezeichnet werden, sind bekannt und z.T. auch handelsüblich. Sie haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse (Gewichtsmittel) von etwa 40000 bis 2000000. Man erhält sie in bekannter Weise durch Substanz-, Lösungs-, Suspensions-, Fällungs- oder Emulsionspolymerisation. Einzelheiten dieser Verfahren sind z.B. im Kunststoffhandbuch, Hrg. R. Vieweg und G. Daumiller, Bd. V "Polystyrol", Carl-Hanser-Verlag München 1969, S. 118 ff beschrieben.

Das Polymere B) kann auch eine Mischung verschiedener Copolymere von Styrol bzw. α-Methylstyrol und Acrylnitril sein, die sich beispielsweise im Gehalt an Acrylnitril, oder in der mittleren Molmasse, unterscheiden.

Der Anteil der Komponente C) an den Formmassen beträgt, bezogen auf die Summe der Komponenten A), B) und C), 1 bis 70, bevorzugt 5 bis 50 und besonders bevorzugt 8 bis 40 Gew.-%. Komponente C) ist ein hydriertes kautschukelastisches Blockcopolymerisat aus

- mindestens zwei Blöcken A, die einpolymerisierte Einheiten eines vinylaromatischen Monomeren aufweist und eine sogenannte "Hartphase" bilden,

und

- mindestens einem zwischen den Blöcken A befindlichen Block B/A, der statistisch einpolymerisierte Einheiten eines vinylaromatischen Monomeren (A) sowie eines Diens (B) aufweist und eine sogenannte "Weichphase" bildet,

wobei die Glastemperatur Tg des Blocks A über 25°C und die des Blocks B/A unter 25°C liegt und das Phasenvolumen-Verhältnis von Block A zu Block B/A so gewählt ist, daß der Anteil der Hartphase am gesamten Blockcopolymerisat 1 - 40 Volumen-% und der Gewichtsanteil des Diens weniger als 50 Gew.-% beträgt.

Im kautschukelastischen Blockcopolymerisat C) sind die olefinischen Doppelbindungen vollständig oder nahezu vollständig hydriert.

Detaillierte Angaben zu Aufbau und Herstellung der Komponente C) finden sich nachfolgend, und weiterhin in der DE-OS 44 20 952, auf die hier ausdrücklich verwiesen wird.

Die Weichphase (Block B/A) wird durch statistische Copolymerisation von vinylaromatischen Monomeren und Dienen in Gegenwart eines polaren Cosolvens erhalten.

Ein hydriertes Blockcopolymerisat C) kann z.B. durch eine der allgemeinen Formeln 1 bis 4 dargestellt werden:

(1) $(A\text{-}B/A)_n\text{-}A$, bevorzugt A-B/A-A;

(2) $X\text{-}[(B/A\text{-}A)_{n]m+1}$, bevorzugt $X\text{-}[\text{-}B/A\text{-}A]_2$;

(3) $X\text{-}[(B/A\text{-}A)_n\text{-}B/A]_{m+1}$;

(4) $Y\text{-}[(B/A\text{-}A)_{n]m+1}$; bevorzugt $Y\text{-}[\text{-}B/A\text{-}A]_2$;

wobei A für den vinylaromatischen Block und B/A für die Weichphase, also den statistisch aus Dien- und vinylaromatischen Einheiten aufgebauten Block steht, X den Rest eines n-funktionellen Initiators, Y den Rest eines m-funktionellen Kopplungsmittels und m und n natürliche Zahlen von 1 bis 10 bedeuten. Bevorzugt ist ein Blockcopolymerisat, dessen Weichphase B/A unterteilt ist in Blöcke

(5) $(B/A)_1\text{-}(B/A)_2$;

(6) $(B/A)_1\text{-}(B/A)_2\text{-}(B/A)_1$;

(7) $(B/A)_1\text{-}(B/A)_2\text{-}(B/A)_3$;

deren Vinylaromat/Dien-Verhältnis in den einzelnen Blöcken B/A unterschiedlich sein kann oder sich innerhalb eines Blocks in den Grenzen $(B/A)_1 \rightarrow (B/A)_3$ kontinuierlich ändern kann (insbesondere zunehmen kann), wobei die Gasübergangstemperatur $T_g$ jedes Teilblocks unter 25°C liegt. Die Variante (14) ist besonders bevorzugt.

Ein besonders bevorzugtes hydriertes Blockcopolymerisat C) hat die Formel

(2) $(A\text{-}B/A)_n\text{-}A$.

Ganz besonders bevorzugt sind hydrierte Blockcopolymerisate C) der Formel

(19) A-B/A-A.

Ein Blockcopolymerisat, das mehrere Blöcke B/A und/oder A mit unterschiedlicher Molmasse je Molekül aufweist, ist ebenfalls bevorzugt.

Bevorzugt als vinylaromatische Verbindung im Sinne der Erfindung ist Styrol und ferner $\alpha$-Methylstyrol und Vinyltoluol sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle nachstehenden Gewichts- und Volumenangaben beziehen sich auf diese Kombination.

Der B/A-Block wird aus etwa 75 - 30 Gew.-% Styrol und 25 - 70 Gew.-% Butadien aufgebaut. Besonders bevorzugt hat ein Weichblock einen Butadienanteil zwischen 35 und 70 % und einen Styrolanteil zwischen 65 und 30 %.

Der Gewichtsanteil des Diens im gesamten Blockcopolymer liegt im Falle der Monomerkombination Styrol/Butadien bei 15 - 50 Gew.-%, derjenige der vinylaromatischen Komponente entsprechend bei 85 - 50 Gew.-%. Besonders bevorzugt sind Butadien-Styrol-Blockcopolymere mit einer Monomerzusammensetzung aus 25 - 50 Gew.% Dien und 75 - 50 Gew.% an vinylaromatischer Verbindung.

Die Blockcopolymeren werden durch anionische Polymerisation in einem unpolaren Lösungsmittel unter Zusatz eines aprotischen, polaren Cosolvens hergestellt. Als Lösungsmittel werden bevorzugt aliphatische Kohlenwasserstoffe wie Cyclohexan oder Methylcyclohexan verwendet. Als Cosolvens werden insbesondere Ether, beispielsweise Tetrahydrofuran und aliphatische Polyether wie Diethylenglykoldimethylether, und tertiäre Amine, z.B. Tributylamin und Pyridin bevorzugt. Das polare Cosolvens wird dem dem unpolaren Lösungsmittel in einer geringen Menge, z.B. von 0,5 - 5 Vol.% zugesetzt. Besonders bevorzugt ist Tetrahydrofuran in einer Menge von 0,1 - 0,3 Vol -%. Erfahrungsgemäß kommt man mit einer Menge von etwa 0,2 Vol.-% in den meisten Fällen aus.

Die anionische Polymerisation wird mittels metallorganischer, insbesondere lithiumorganischer Verbindungen wie Methyllithium, Ethyllithium, Propyllithium, n-Butyllithium, sek. Butyllithium und tert. Butyllithium initiiert. Die metallorganische Verbindung wird als Lösung in einem chemisch indifferenten (inerten) Kohlenwasserstoff in einer Menge von üblicherweise 0,002 bis 5 Mol-%, bezogen auf die Monomeren, zugesetzt.

Die Polymerisationstemperatur kann zwischen 0 und 130°C betragen. Bevorzugt wird der Temperaturbereich zwischen 30 und 100°C.

Erfindungsgemäß liegt der Volumenanteil der aus Dien- und vinylaromatischen Sequenzen aufgebauten Weichphase an der Komponente C) bei 60 - 99, bevorzugt bei 70 - 90 und besonders bevorzugt bei 80 - 90 Vol.-%. Die aus den vinylaromatischen Monomeren entstandenen Blöcke A bilden die Hartphase, deren Volumenanteil entsprechend 1 - 40, bevorzugt 10 - 30 und besonders bevorzugt 10 - 20 Vol.-% ausmacht.

Die Weichphasen (Blöcke B und B/A) der Komponente C) haben üblicherweise eine Gasübergangstemperatur zwischen -50 und +25°C, bevorzugt -50 bis +5°C. Die Gasübergangstemperatur der Hartphase (Block A) liegt bevorzugt über 50°C.

Das Molekulargewicht des Blocks A liegt dabei i.a. bei 1000 bis 200.000, bevorzugt bei 3.000 bis 80.000 [g/mol]. Innerhalb eines Moleküls können A-Blöcke unterschiedliche Molmasse haben.

Das Molekulargewicht des Blocks B/A liegt üblicherweise bei 2.000 bis 250.000, bevorzugt 5.000 bis 150.000 [g/mol]. Auch Block B/A kann wie Block A innerhalb eines Moleküls unterschiedliche Molekulargewichtswerte haben.

Das Kupplungszentrum X wird durch die Umsetzung der lebenden anionischen Kettenenden mit einem mindestens bifunktionellen Kupplungsagens gebildet. Beispiel für derartige Verbindungen sind in den US-PS 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat, -acetat oder -benzoat geeignet.

Der statistische Block B/A kann selbst wieder in Blöcke B1/A1-B2/A2-B3/A3-... unterteilt sein. Bevorzugt besteht der statistische Block aus 2 bis 15 statistischen Teilblöcken, besonders bevorzugt aus 3 bis 10 Teilblöcken.

Die Polymerisation wird mehrstufig durchgeführt und bei monofunktioneller Initiierung z.B. mit der Herstellung des Hartblocks A begonnen. Ein Teil der Monomeren wird im Reaktor vorgelegt und die Polymerisation durch Zugabe des Initiators gestartet. Um einen definierten Kettenaufbau zu erzielen, ist es empfehlenswert, jedoch nicht zwingend, den Prozeß bis zu einem hohen Umsatz (über 99%) zu führen, bevor die zweite Monomerzugabe erfolgt.

Die Abfolge der Monomerzugabe richtet sich nach dem gewählten Blockaufbau. Bei monofunktioneller Initiierung wird z.B. zuerst die vinylaromatische Verbindung entweder vorgelegt oder direkt zudosiert. Danach sollten Dien und Vinylaromat möglichst gleichzeitig zugegeben werden. Durch das Mengenverhältnis von Dien zu vinylaromatischer Verbindung, die Konzentration und chemische Struktur der Lewis-Base sowie die Temperatur wird der statistische Aufbau und die Zusammensetzung des Blocks B/A bestimmt. Erfindungsgemäß nimmt das Dien relativ zur Gesamtmasse einschließlich vinylaromatischer Verbindung einen Gewichtsanteil von 25% bis 70% ein. Anschließend kann Block A durch Zugabe des Vinylaromaten anpolymerisiert werden. Stattdessen können benötigte Polymerblöcke auch durch die Kopplungsreaktion miteinander verbunden werden. Im Falle der bifunktionellen Initiierung wird zuerst der B/A-Block aufgebaut, gefolgt vom A-Block.

Die Reaktion wird in an sich bekannter Weise durch Zugabe einer polaren Verbindung wie Wasser oder eines Alkohols, etwa Ethanol oder Isopropanol, abgebrochen.

Die Hydrierung der im Polymerisat noch vorhandenen olefinischen Doppelbindungen, die vom Dien stammen, nimmt man ebenfalls in an sich bekannter Weise vor, und zwar bevorzugt in homogener Phase mit Wasserstoff mittels eines löslichen, selektiv wirkenden Hydrierkatalysators wie einer Mischung von Nickel(II)acetylacetonat und Aluminiumtriisobutyl in einem inerten Lösungsmittel wie Hexan. Die Hydriertemperatur beträgt vorzugsweise 20 bis 200°C, und für den Wasserstoffdruck empfiehlt sich ein Bereich von 6 bis 30 bar. Eine vollständige Hydrierung der nichtaromatischen Doppelbindungen ist nicht erforderlich, viel mehr genügt ein Hydrierungsgrad von 95 %. Näheres zur Hydrierung ist beispielsweise der DE-A 31 06 959 zu entnehmen.

Die Aufarbeitung auf die gewünschten hydrierten Polymeren C), deren Molmasse man vorzugsweise auf 50000 bis 300000, besonders 70000 bis 180000 (Gewichtsmittel) einstellt, erfolgt wie üblich. In der Regel wird zunächst das Lösungsmittel entfernt, wonach das Polymere extrudiert und granuliert wird.

Außer den Komponenten A), B) und C) können die thermoplastischen Formmassen noch Zusatzstoffe wie Gleit- und Entformungsmittel, Pigmente, Farbstoffe, Flammschutzmittel, Antioxidantien, Stabilisatoren gegen Lichteinwirkung, faser- und pulverförmige Füllund Verstärkungsmittel und Antistatika in den für diese Mittel üblichen Mengen enthalten. Besonders im Falle der Herstellung von Folien aus den erfindungsgemäßen Formmassen verwendet man Weichmacher mit, beispielsweise Copolymere einer mittleren Molmasse von 2000 bis 8000 aus 30 bis 70 Gew.-% Ethylenoxid und 70 bis 30 Gew.-% 1,2-Propylenoxid in Mengen von 0,5 bis 10 Gew.-%, bezogen auf die Summe der Komponenten A), B) und C).

Die Herstellung der erfindungsgemäßen Formmassen kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch ohne Schmelzen "kalt" vermischt werden und das pulvrige oder aus Granulaten bestehende Gemisch wird erst bei der Verarbeitung aufgeschmolzen und homogenisiert.

Aus den Formmassen lassen sich Formkörper aller Art, insbesondere Folien, herstellen. Die Herstellung der Folien kann durch Extrudieren, Walzen, Kalandrieren und andere dem Fachmann bekannte Verfahren erfolgen. Die erfindungsgemäßen Formmassen werden dabei durch Erwärmen und/oder Friktion allein oder unter Mitverwendung von weichmachenden oder anderen Zusatzstoffen zu einer verarbeitungsfähigen Folie geformt. Die Verarbeitung derartiger Folien zu Fertigprodukten erfolgt beispielsweise durch Warmformen oder Tiefziehen.
Die Folien haben vielfältige Verwendungsmöglichkeiten, insbesondere in der Automobilindustrie zur Gestaltung des Autoinnenraumes, für Dekorationszwecke, als Lederersatz bei der Herstellung von Koffern und Taschen und in der Möbelindustrie als Überzugsmaterial zur Kaschierung von Möbeloberflächen.
Die erfindungsgemäßen thermoplastischen Formmassen enthalten kein Halogen. Sie sind weitestgehend frei von ausdünstenden oder ausschwitzenden Bestandteilen und zeigen bei der Verarbeitung praktisch keine nachteiligen Veränderungen durch Abbaureaktionen, wie etwa Verfärbungen. Weiterhin weisen sie gute mechanische Eigenschaften auf. Insbesondere haben die aus den erfindungsgemäßen Formmassen hergestellten Folien gute Tiefzieheigenschaften (hohe Werte für Reißdehnung und Weiterreißfestigkeit) sowie einen angenehmen Griff ("soft touch").

Beispiele

Es wurden folgende Bestandteile hergestellt bzw. verwendet (alle %-Angaben sind Gew.-%)

Komponente A) :

Partikelförmiges Pfropfpolymerisat aus vernetztem Poly-n-Butylacrylat (Kern) und Styrol/Acrylnitril-Copolymer (Schale)
Zu einer Mischung aus 3 g eines Polybutylacrylat-Saatlatex, 100 g Wasser und 0,2 g Kaliumpersulfat wurden im Verlauf von 4 Stunden bei 60°C eine Mischung aus 98 g n-Butylacrylat und 2 g Dihydrodicyclopentadienylacrylat sowie getrennt davon eine Lösung von 1 g Na-$C_{12}$-$C_{18}$-Paraffinsulfonat in 50 g Wasser gegeben. Die Polymerisation wurde danach noch für 3 Stunden fortgesetzt. Der mittlere Teilchendurchmesser $d_{50}$ des entstandenen Latex betrug 430 nm bei enger Verteilung der Teilchengröße (Q = 0,1).
150 g dieses Latex wurden mit 60 g Wasser, 0,03 g Kaliumpersulfat und 0,05 g Lauroylperoxid vermischt, wonach auf die Latexteilchen im Laufe von 3 Stunden bei 65°C zunächst 20 g Styrol und danach im Laufe von weiteren 4 Stunden ein Gemisch aus 15 g Styrol und 5 g Acrylnitril aufgepfropft wurden. Anschließend wurde das Polymerisat mit einer Calciumchloridlösung bei 95°C ausgefällt, abgetrennt, mit Wasser gewaschen und im warmen Luftstrom getrocknet. Der Pfropfgrad des Polymerisates betrug 35 % und die Teilchen hatten einen mittleren Durchmesser $d_{50}$ von 510 nm.
Das Pfropfpolymerisat setzte sich wie folgt zusammen (gerundete Werte):

60 Gew.-% eines Pfropfkerns aus Polybutylacrylat, vernetzt,
20 Gew.-% einer inneren Pfropfstufe aus Styrol-Polymer und
20 Gew.-% einer äußeren Pfropfstufe aus Styrol/Acrylnitril-Copolymer im Gewichtsverhältnis S/AN 3:1.

Das anfangs eingesetzte Saat-Polymere wurde nach dem Verfahren der EP-B 6503 (Spalte 12, Zeile 55, bis Spalte 13, Zeile 22) durch Polymerisation von n-Butylacrylat und Tricyclodecenylacrylat in wäßriger Emulsion hergestellt und hatte einen Feststoffgehalt von 40 %.
Die bei der Beschreibung der Komponente A) erwähnte mittlere Teilchengröße ist das Gewichtsmittel der Teilchengrößen.
Der mittlere Durchmesser entspricht dem $d_{50}$-Wert, demzufolge 50 Gew.-% aller Teilchen einen kleineren und 50 Gew.-% einen größeren Durchmesser haben als derjenige Durchmesser, der dem $d_{50}$-Wert entspricht. Um die Breite der Teilchengrößenverteilung zu charakterisieren, werden zusätzlich zum $d_{50}$-Wert oftmals der $d_{10}$- sowie der $d_{90}$-Wert angegeben. 10 Gew.-% aller Teilchen sind kleiner und 90 Gew.-% größer als der $d_{10}$-Durchmesser. Analog haben 90 Gew.-% aller Teilchen einen kleineren und 10 Gew.-% einen größeren Durchmesser als denjenigen, der dem $d_{90}$-Wert entspricht. Der Quotient $Q = (d_{90}-d_{10})/d_{50}$ ist ein Maß für die Breite der Teilchengrößenverteilung. Je kleiner Q ist, desto enger ist die Verteilung.

Komponente B):

Copolymerisat aus Styrol und Acrylnitril

Es wurde ein Copolymerisat aus 65 Gew.-% Styrol und 35 Gew.-% Acrylnitril nach dem Verfahren der kontinuierlichen Lösungspolymerisation hergestellt, wie es im Kunststoff-Handbuch, Hrg. R. Vieweg und G. Danmiller, Bd.

V "Polystyrol", Carl-Hanser-Verlag München 1969, Seite 122 bis 124, beschrieben ist. Die Viskositätszahl VZ (ermittelt nach DIN 53 726 bei 25°C, 0,5 Gew. -% in Dimethylformamid) betrug 80 ml/g.

Komponente C) (erfindungsgemäß):

kautschukelastisches Blockcopolymerisat

Ein simultan heiz- und kühlbarer 50 1-Edelstahlautoklav mit Rührer wurde durch Spülen mit Stickstoff und Auskochen mit einer Lösung von sec.-Butyllithium und 1,1-Diphenylethylen in Cyclohexan und Trocknen vorbereitet. Es wurden 22,8 1 Cyclohexan eingefüllt, wonach 42 ml sek.-Butyllithium und 65,8 ml Tetrahydrofuran zugesetzt wurden. In der Tabelle 1 sind die einzelnen Stufen der Polymerisation zusammengefaßt.

In jeder Stufe war die Dauer des Monomerzulaufs klein gegenüber der Dauer der Polymerisation. Durch Heizung bzw. Kühlung des Reaktormantels wurden die angegebenen Anfangs- bzw. Endtemperaturen eingestellt.

Tabelle 1

| Stufe | 1 | 2 | 3 | 4 | 5 |
|---|---|---|---|---|---|
| Zulauf Butadien [g] | - | 1120 | 1120 | 1120 | - |
| Zulauf Styrol [g] | 1008 | 1412 | 1412 | 1412 | 1008 |
| $T_{Anfang}$ [°C] | 30 | 77 | 73 | 74 | 74 |
| $T_{Ende}$ [°C] | 77 | 102 | 95 | 88 | 85 |
| Pol.dauer [min] | 12 | 14 | 10 | 26 | 14 |

Nach Umsetzungsende (Verbrauch der Monomeren) wurde die Polymerisation abgebrochen, indem man mit Ethanol bis zur Farblosigkeit titrierte, und die Mischung mit einem geringen Säureüberschuß angesäuert. Das Produkt enthielt 21 % 1,2-Vinylgruppen.

Zur Hydrierung wurden der erhaltenen Polymerlösung eine Suspension von 1,5 g Nickel(II)acetylacetonat in 30 ml Toluol und 34 ml einer 20 gew.-%igen Lösung von Aluminiumtriisobutyl in Hexan zugefügt, wonach man sie 20 Stunden lang bei 130 bis 140°C einem Wasserstoffdruck von 15 bar aussetzte.

Die Aufarbeitung des Reaktionsgemisches auf das hydrierte Polymerisat wurde wie üblich vorgenommen, wobei das Lösungsmittel zweckmäßigerweise in einem Entgasungsextruder bei 200°C entfernt wurde. Man erhielt ein Granulat.

Das erhaltene Polymere C) wies eine Struktur

A-B/A-A

auf, wobei die Weichphase B/A gemäß

$$(B/A)_1 - (B/A)_2 - (B/A)_3$$

in 3 Blöcke unterteilt ist. A und B/A bezeichnen hier die bereits definierten Blöcke des Polymeren. Block A ist ein Homopolystyrol-block, Block B/A ist ein Block aus statistisch polymerisierten Styrol- und hydrierten Butadien-(= Butylen)-Einheiten. Der Anteil der Butyleneinheiten in der Weichphase B/A betrug 20 Gew.-%, derjenige der Styroleinheiten demnach 80 Gew.-%.

Der Styrolanteil im gesamten Polymeren C) betrug 65 Gew.-%.

Der Anteil der beiden Hartphasen A im Polymeren C) war jeweils 10,4 Gew. -%, der Anteil der Weichphase B/A demnach 79,2 Gew.-%.

Die mittlere Molmasse $\overline{M}_w$ des Polymeren C) betrug etwa 130000 g/ mol, wie durch Gelpermeritionschromatographie (Kalibration gegen Polystyrol) ermittelt wurde.

Komponente C*) (zum Vergleich):

hydriertes Styrol-Butadien-Copolymer

Eine Lösung von 520 g Styrol, 480 g Butadien und 20 ml Tetrahydrofuran in 4 1 Cyclohexan wurde bei 0°C zunächst langsam mit sek.-Butyllithium versetzt, um auf diese Weise protonenaktive Verunreinigungen zu desaktivieren. Nach dem Anspringen der Polymerisationsreaktion, erkenntlich an einem Temperaturanstieg von 0,2°C, wurden sofort 0,8 g sek. -Butyllithium zugefügt. Die Polymerisationswärme wurde durch Siedekühlung abgeführt. Dabei wurde die Kühlleistung so eingestellt, daß die Temperatur innerhalb von 30 min auf 120°C anstieg. Diese Temperatur wurde weitere 10 min gehalten, wonach die Polymerisation durch Zugabe von 1 g Ethanol abgebrochen wurde.
Zur Hydrierung wurden der erhaltenen Polymerlösung eine Suspension von 1,5 g Nickel(II)acetylacetonat in 30 ml Toluol und 34 ml einer 20 gew.-%igen Lösung von Aluminiumtriisobutyl in Hexan zugefügt, wonach man sie 60 min lang bei 80 bis 110°C einem Wasserstoffdruck von 15 bar aussetzte.
Die Aufarbeitung des Reaktionsgemisches auf das hydrierte Polymerisat wurde wie üblich vorgenommen, wobei das Lösungsmittel zweckmäßigerweise in einer Direktentgasungsanlage entfernt wurde.
Das erhaltene Polymere bestand aus einem Block, dessen Anfang Butadien-reich (Styrol-arm) und dessen Ende Styrol-reich (Butadienarm) ist - es lag also ein Gradient vor -, sowie aus einem Homopolystyrol-Block, der sich an das Styrol-reiche Ende des ersten Blocks anschließt.
Der Styrolgehalt des enthaltenen Polymeren, das als Glissoviscal® SG (Fa. BASF) im Handel erhältlich ist, betrug 52 Gew.-%, bezogen auf die Gesamtmasse des Polymeren. Der Anteil des Homo-Polystyrol-Endblocks am Polymeren betrug 13 Gew. -%. Die mittlere Molmasse des auf die beschriebene Weise hergestellten Produktes war 80000, ermittelt durch Gelpermeationschromatographie.
Erfindungsgemäße Massen und ihre Eigenschaften
Aus den Komponenten A), B) und C) bzw. C*) wurden Mischungen hergestellt, die bei 200°C auf einem Walzwerk zu Folien von 1 mm Stärke verarbeitet wurden.
Folgende Eigenschaften der Folien wurden ermittelt:

- Zugfestigkeit: Der Zugversuch wurde nach DIN 53 504 an Streifen vorgenommen, die aus der Folie ausgestanzt wurden.
- Reißdehnung: die Dehnung bei Anlegen der Reißkraft wurde nach DIN 53 504 im Zugversuch bestimmt und in % der ursprünglichen Abmessung des Streifens angegeben.
- Weiterreißfestigkeit: es wurde ein Weiterreißversuch nach DIN 43 515 an ausgestanzten Streifen vorgenommen.
- Shore-Härte: es wurde die Shore-Härte nach DIN 43 505 mit dem Prüfgerät D bestimmt.
- Wärmeformbeständigkeit: sie wurde nach DIN 53 460 als Vicat-Zahl mit der Meßmethode A ermittelt.

Die Zusammensetzungen der hergestellten Folien und die Versuchsergebnisse sind in der Tabelle 2 zusammengestellt.

Tabelle 2

| Versuch Nr. | 1 | 2 V |
|---|---|---|
| Zusammensetzung [Gew. -%] : | | |
| Komponente A) | 80 | 80 |
| Komponente B) | 10 | 10 |
| Komponente C) bzw. C*) | 10 C | 10 C* |
| Eigenschaften: | | |
| Zugfestigkeit [$N/mm^2$] | 17 | 15 |
| Reißdehnung [%] | 170 | 140 |
| Weiterreißfestigkeit [$N/mm^2$] | 50 | 46 |
| Härte Shore D | 45 | 50 |

Tabelle 2 (fortgesetzt)

| Versuch Nr. | 1 | 2 V |
|---|---|---|
| Wärmeformbeständigkeit: Vicat A [°C] | 92 | 89 |

V zum Vergleich

Folien aus Formmassen, in denen anstelle des erfindungsgemäßen Polymeren C) ein hydriertes Polymeres C*) (Butadien-haltiger Block mit Gradient Styrol-arm zu Styrol-reich, daran anschließend Homopolystyrol-Block) enthalten, weisen eine erheblich geringere Reißdehnung sowie eine deutlich niedrigere Weiterreißfestigkeit auf (Versuch 2 V).

Demgegenüber vereinen Folien, in denen das erfindungsgemäße Polymere C) (Polystyrolblock - 3 statistische Polymerblöcke aus Styrol und hydriertem Butadien - Polystyrolblock) enthalten ist, gute Zugfestigkeit, hohe Reißdehnung, gute Weiterreißfestigkeit, eine geringe Härte und hohe Wärmeformbeständigkeit miteinander (Versuch 1) .

**Patentansprüche**

**1.** Thermoplastische halogenfreie Formmassen aus

A) 30 bis 98 Gew.-% eines Pfropfpolymerisates aus

$a_K$) 30 bis 90 Gew.-% eines kautschukelastischen Pfropfkerns, erhältlich durch Copolymerisation von

$a_K/1$) 80 bis 99,99 Gew.-% eines oder mehrerer ($C_1$-$C_{10}$-Alkyl)ester der Acrylsäure,

$a_K/2$) 0,01 bis 20 Gew.-% eines vernetzenden Monomeren, und

$a_K/3$) 0 bis 40 Gew.-% von einem oder mehreren weiteren monoethylenisch ungesättigten Monomeren,

$a_S$) 10 bis 70 Gew.-% einer Pfropfschale aus

$a_S/1$) 50 bis 100 Gew.-% einer Styrolverbindung der allgemeinen Formel

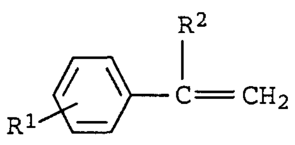

in der $R^1$ und $R^2$ für Wasserstoff oder $C_1$-$C_8$-Alkyl stehen,

oder eines ($C_1$-$C_8$-Alkyl)esters der Acrylsäure oder Methacrylsäure,

oder einer Mischung der Styrolverbindung und des ($C_1$-$C_8$-Alkyl)esters der Acrylsäure oder Methacrylsäure, und

$a_s/2$) 0 bis 50 Gew.-% von einem oder mehreren weiteren monoethylenisch ungesättigten Monomeren,

B) 1 bis 50 Gew.-% eines thermoplastischen Polymerisates aus

$b_1$) 50 bis 100 Gew.-% Styrol und/oder $\alpha$-Methylstyrol,

$b_2$) 0 bis 50 Gew.-% Acrylnitril, und

$b_3$) 0 bis 50 Gew.-% von einem weiteren oder mehreren weiteren monoethylenisch ungesättigten Monomeren,

und von 1 bis 70 Gew.-% einer Komponente C, dadurch gekennzeichnet, daß C

ein kautschukelastisches Blockcopolymerisat, in welchem die olefinischen Doppelbindungen vollständig oder nahezu vollständig hydriert wurden, ist und aus

mindestens zwei Blöcken A, die einpolymerisierte Einheiten eines vinylaromatischen Monomeren und eine Glasübergangstemperatur über 25°C aufweisen,

und mindestens einen zwischen den Blöcken A befindlichen elastomeren Block B/A, der sowohl statistisch einpolymerisierte Einheiten eines vinylaromatischen Monomeren (A) wie eines Diens (B) aufweist, statistisch aufgebaut ist und eine Glasübergangstemperatur Tg unter 25°C hat,

wobei der Anteil der aus den Blöcken A gebildeten Hartphase am gesamten Blockcopolymerisat 1 - 40 Volumen-% und der Gewichtsanteil des Diens weniger als 50 Gew.% beträgt,

aufgebaut ist.

**2.** Thermoplastische Formmassen nach Anspruch 1, in denen im Blockcopolymerisat C) die $T_g$ der Hartphase (Blöcke A) über 50°C und die $T_g$ der Weichphasen (Blöcke B/A) unter 5°C liegt.

**3.** Thermoplastische Formmassen nach den Ansprüchen 1 und 2, in denen im Blockcopolymerisat C) das vinylaromatische Monomere ausgewählt ist aus Styrol, $\alpha$-Methylstyrol, Vinyltoluol oder deren Mischungen und das Dien ausgewählt ist aus Butadien und Isopren oder deren Mischungen.

**4.** Thermoplastische Formmassen nach den Ansprüchen 1 bis 3, in denen im Blockcopolymerisat C) die (gegebenenfalls zweite bzw. weitere) Weichphase (Block B/A) aus einen Copolymerisat eines Vinylaromaten mit einem Dien gebildet wird.

**5.** Thermoplastische Formmassen nach Anspruch 1, in denen das hydrierte Blockcopolymerisat C) gemäß der Formel

$$(A\text{-}B/A)_n\text{-}A$$

aufgebaut ist, wobei A für den vinylaromatischen Block, B/A für den statistisch aus Dien- und vinylaromatischen Einheiten aufgebauten Block, und n für natürliche Zahlen von 1 bis 10, steht.

**6.** Thermoplastische Formmassen nach Anspruch 5, in denen die Weichphase (Block B/A) des hydrierten Blockpolymerisates C) unterteilt ist in Blöcke

(1) $(B/A)_1\text{-}(B/A)_2$

(2) $(B/A)_1\text{-}(B/A)_2\text{-}(B/A)_1$

(3) $(B/A)_1\text{-}(B/A)_2\text{-}(B/A)_3$

deren Vinylaromat/Dien-Verhältnis in den einzelnen Blöcken B/A unterschiedlich ist oder sich innerhalb eins Blocks in den Grenzen $(B/A)_1 \rightarrow (B/A)_3$ kontinuierlich ändert, wobei die Glasübergangstemperatur $T_g$ jedes Teilblocks unter 25°C liegt.

**7.** Thermoplastische Formmassen nach den Ansprüchen 5 und 6, in denen das hydrierte Blockcopolymerisat C) gemäß der Formel

A-B/A-A

aufgebaut ist, wobei A für den vinylaromatischen Block, und B/A für den statistisch aus Dien- und vinylaromatischen Einheiten aufgebauten Block, steht.

**8.** Thermoplastische Formmassen nach Anspruch 2, in denen die Komponente B) ein Copolymerisat aus 60 bis 95 Gew.-% Styrol und 5 bis 40 Gew.-% Acrylnitril ist.

**9.** Verwendung der thermoplastischen Formmassen gemäß den Ansprüchen 1 bis 8 zur Herstellung von Folien und Formkörpern.

**10.** Folien und Formkörper aus den thermoplastischen Formmassen gemäß den Ansprüchen 1 bis 8.

**11.** Verwendung der Folien und Formkörper gemäß Anspruch 10 für den Automobil-Innenausbau.

## Claims

**1.** A halogen-free thermoplastic molding composition comprising

A) from 30 to 98% by weight of a graft polymer comprising

$a_K$) from 30 to 90% by weight of an elastomeric graft core, obtainable by copolymerization of

$a_K$/1) from 80 to 99.99% by weight of one or more $C_1$-$C_{10}$-alkyl acrylates,

$a_K$/2) from 0.01 to 20% by weight of a monomer with crosslinking effect, and

$a_K$/3) from 0 to 40% by weight of one or more other monoethylenically unsaturated monomers,

$a_s$) from 10 to 70% by weight of a graft shell comprising

$a_S$/1) from 50 to 100% by weight of a styrene compound of the formula

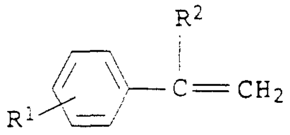

where $R^1$ and $R^2$ ire hydrogen or $C_1$-$C_8$-alkyl,

or a $C_1$-$C_8$-alkyl acrylate or methacrylate,

or a mixture of the styrene compound and the $C_1$-$C_8$-alkyl acrylate or methacrylate, and

$a_s$/2) from 0 to 50% by weight of one or more other monoethylenically unsaturated monomers,

B) from 1 to 50% by weight of a thermoplastic polymer comprising

$b_1$) from 50 to 100% by weight of styrene and/or $\alpha$-methylstyrene,

$b_2$) from 0 to 50% by weight of acrylonitrile, and

$b_3$) from 0 to 50% by weight of one or more other monoethylenically unsaturated monomers,

and from 1 to 70% by weight of a component C, wherein C is

an elastomeric block copolymer in which all or virtually all of the olefinic double bonds have been hydrogenated, and has been constructed from

at least two blocks A, which contain, in their polymer chains units of a vinylaromatic monomer, and have a glass transition temperature above 25°C,

and from at least one elastomeric block B/A between the blocks A, which contains, randomly in its polymer chain, units of both a vinylaromatic monomer (A) and a diene (B), and has a random construction, and has a glass transition temperature Tg below 25°C,

where the proportion of the hard phase formed from the blocks A in the entire block copolymer is from 1 to 40% by volume and the proportion by weight of the diene is less than 50% by weight.

**2.** A thermoplastic molding composition as claimed in claim 1, wherein, in the block copolymer C), the $T_g$ of the hard phase (blocks A) is above 50°C and the $T_g$ of the soft phases (blocks B/A) is below 5°C.

**3.** A thermoplastic molding composition as claimed in claim 1 or 2, wherein, in the block copolymer C), the vinylaromatic monomer is selected from the group consisting of styrene, $\alpha$-methylstyrene, vinyltoluene and mixtures of these, and the diene is selected from the group consisting of butadiene, isoprene and mixtures of these.

**4.** A thermoplastic molding composition as claimed in any of claims 1 to 3, wherein, in the block copolymer C), the (if appropriate second or further) soft phase (block B/A) is formed from a copolymer of a vinylaromatic with a diene.

**5.** A thermoplastic molding composition as claimed in claim 1, wherein the hydrogenated block copolymer C) is constructed according to the formula

$$(A\text{-}B/A)_n\text{-}A$$

where A is the vinylaromatic block, B/A is the block constructed randomly from diene and vinylaromatic units, and n is an integer from 1 to 10.

**6.** A thermoplastic molding composition as claimed in claim 5 in which the soft phase (block B/A) of the hydrogenated block copolymer C) is subdivided into blocks

(1) $(B/A)_1\text{-}(B/A)_2$

(2) $(B/A)_1\text{-}(B/A)_2\text{-}(B/A)_1$

(3) $(B/A)_1\text{-}(B/A)_2\text{-}(B/A)_3$

whose vinylaromatic/diene ratio is different in the individual blocks B/A or varies continuously within a single block within the limits $(B/A)_1 \rightarrow (B/A)_3$ where the glass transition temperature $T_g$ of each sub-block is below 25°C.

**7.** A thermoplastic molding composition as claimed in claim 5 or 6, wherein the hydrogenated block copolymer C) is constructed according to the formula

$$A\text{-}B/A\text{-}A$$

where A is the vinylaromatic block, and B/A is the block constructed randomly from diene and vinylaromatic units.

**8.** A thermoplastic molding composition as claimed in claim 2, wherein component B) is a copolymer of from 60 to

95% by weight of styrene and from 5 to 40% by weight of acrylonitrile.

**9.** The use of a thermoplastic molding composition as claimed in any of claims 1 to 8 for producing films and shaped articles.

**10.** A film or shaped article made from a thermoplastic molding composition as claimed in any of claims 1 to 8.

**11.** The use of a film or shaped article as claimed in claim 10 for internal decoration of automobiles.

**Revendications**

**1.** Masses de moulage thermoplastiques exemptes d'halogènes, constituées de:

A) 30 à 98% en poids d'un copolymère de greffage à base de

$a_K$) 30 à 90% en poids d'un noyau de greffage à élasticité de caoutchouc, que l'on peut obtenir par copolymérisation de
$a_K$/1 ) 80 à 99,99% en poids d'un ou plusieurs ester(s) alkylique(s) en $C_1$ à $C_{10}$ de l'acide acrylique,
$a_K$/2) 0,01 à 20% en poids d'un monomère réticulant, et
$a_K$/3) 0 à 40% en poids d'un ou plusieurs autre(s) monomère(s) monoéthyléniquement insaturé(s),
$a_s$) 10 à 70% en poids d'une enveloppe de greffage à base de:

$a_s$/1) 50 à 100% en poids d'un composé styrénique de la formule

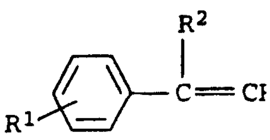

générale
dans laquelle $R^1$ et $R^2$ représentent de l'hydrogène ou des radicaux alkyle en $C_1$ à $C_8$,
ou bien un ester alkylique en $C_1$ à $C_8$ de l'acide acrylique ou de l'acide méthacrylique,
ou bien un mélange du composé styrénique et de l'ester alkylique en $C_1$ à $C_8$ de l'acide acrylique ou de l'acide méthacrylique, et

$a_S$/2) 0 à 50% en poids d'un ou plusieurs autre(s) monomère(s) monoéthyléniquement insaturé(s),

B) 1 à 50% en poids d'un polymère thermoplastique à base de:

$b_1$) 50 à 100% en poids de styrène ou d'α-méthylstyrène,
$b_2$) 0 à 50% en poids d'acrylonitrile, et
$b_3$) 0 à 50% en poids d'un ou plusieurs autre(s) monomère(s) monoéthyléniquement insaturé(s),

et de 1 à 70% en poids d'un composé C, caractérisées en ce que C est un copolymère bloc à élasticité de caoutchouc, dans lequel les doubles liaisons oléfiniques sont totalement ou presque totalement hydrogénées, et est constitué de

au moins deux blocs A présentant des unités copolymérisées d'un monomère vinylaromatique et présentant une température de transition vitreuse supérieure à 25°C,
et au moins un bloc B/A élastomère se trouvant entre les blocs A, présentant à la fois des unités statistiquement copolymérisées d'un monomère vinylaromatique (A) et d'un diène, à structure statistique et présentant une température de transition vitreuse Tg inférieure à 25°C,
la fraction de la phase dure formée à partir des blocs A par rapport à l'ensemble du copolymère bloc étant de 1 à 40% en volume et la fraction pondérale du diène étant inférieure à 50% en poids.

**2.** Masses de moulage thermoplastiques selon la revendication 1 dans lesquelles, dans le copolymère bloc C), la Tg de la phase dure (blocs A) est supérieure à 50°C et la Tg de la phase molle (blocs B/A) est inférieure à 5°C.

**3.** Masses de moulage thermoplastiques selon les revendications 1 et 2 dans lesquelles, dans le copolymère bloc C), le monomère vinylaromatique est choisi dans le groupe formé par le styrène, l'α-méthylstyrène, le vinyltoluène ou leurs mélanges, et le diène est choisi parmi le butadiène et l'isoprène, ou leurs mélanges.

**4.** Masses de moulage thermoplastiques selon les revendications 1 à 3 dans lesquelles, dans le copolymère bloc C), la (éventuellement deuxième et/ou suivante) phase molle (bloc B/A) est formée à partir d'un copolymère d'un vinylaromatique et d'un diène.

**5.** Masses de moulage thermoplastiques selon la revendication 1, dans lesquelles le copolymère bloc hydrogéné C) est structuré selon la formule

$$(A - B/A)_n - A$$

dans laquelle A représente le bloc vinylaromatique, B/A représente le bloc statistique constitué d'unités diène et vinylaromatiques, et n est un nombre naturel de 1 à 10.

**6.** Masses de moulage thermoplastiques selon la revendication 5, dans lesquels la phase molle (bloc B/A) du copolymère bloc hydrogéné C) est subdivisée en blocs

(1) $(B/A)_1 - (B/A)_2$

(2) $(B/A)_1 - (B/A)_2 - (B/A)_1$

(3) $(B/A)_1 - (B/A)_2 - (B/A)_3$

dont la proportion vinylaromatique/diène diffère dans les blocs individuels B/A ou varie en continu au sein d'un bloc dans les limites $(B/A)_1 \rightarrow (B/A)_3$, la température de transition vitreuse Tg de chaque bloc partiel étant inférieure à 25°C.

**7.** Masses de moulage thermoplastiques selon les revendications 5 et 6, dans lesquelles le copolymère bloc hydrogéné C) est structuré selon la formule

$$A — B/A — A$$

dans laquelle A représente le bloc vinylaromatique et B/A représente le bloc statistique constitué d'unités diène et vinylaromatique.

**8.** Masses de moulage thermoplastiques selon la revendication 2, dans lesquelles le composant C) est un copolymère de 60 à 95% en poids de styrène et 5 à 40% en poids d'acrylonitrile.

**9.** Utilisation des masses de moulage thermoplastiques selon les revendications 1 à 8 pour la production de feuilles et de corps façonnés.

**10.** Feuilles et corps façonnés obtenus à partir des masses de moulage thermoplastiques selon les revendications 1 à 8.

**11.** Utilisation des feuilles et corps façonnés selon la revendication 10 dans l'équipement intérieur de véhicules automobiles.